Europäisches Patentamt

European Patent Office

Office européen des brevets

(19)

(11) Numéro de publication: **0 182 425**
**A1**

(12) **DEMANDE DE BREVET EUROPEEN**

(21) Numéro de dépôt: 85201821.7

(51) Int. Cl.⁴: **H 04 N 5/40**

(22) Date de dépôt: 08.11.85

(30) Priorité: 20.11.84 FR 8417669

(43) Date de publication de la demande: 28.05.86
Bulletin 86/22

(84) Etats contractants désignés: **DE FR GB**

(71) Demandeur: **LA RADIOTECHNIQUE, Société Anonyme dite:, 51, rue Carnot BP 301, F-92156 Suresnes Cedex (FR)**

(84) Etats contractants désignés: **FR**

(71) Demandeur: **N.V. Philips' Gloeilampenfabrieken, Groenewoudseweg 1, NL-5621 BA Eindhoven (NL)**

(84) Etats contractants désignés: **DE GB**

(72) Inventeur: **Tran Kiem, Nguyen, Société Civile S.P.I.D. 209, rue de L'Université, F-75007 Paris (FR)**

(74) Mandataire: **Caron, Jean et al, SOCIETE CIVILE S.P.I.D. 209, rue de l'Université, F-75007 Paris (FR)**

(54) Circuit modulateur de signaux de télévision.

(57) Le circuit de l'invention s'applique aux jeux vidéo ou autres périphériques de téléviseur utilisant ce dernier comme terminal de visualisation d'images synthétiques. Les téléviseurs concernés sont ceux dont le son est modulé en fréquence.

Selon l'invention un transistor MOS bigrille est attaqué sur trois électrodes distinctes (20, 21, 22) par
- la fréquence porteuse image (non modulée)
- la fréquence interporteuse son, modulée en fréquence par le son
- la vidéo composite
et l'onde résultante modulée par la vidéo et le son est recueillie sur la dernière électrode (23).

"CIRCUIT MODULATEUR DE SIGNAUX DE TELEVISION"

L'invention concerne un modulateur de signaux de télévision particulièrement adapté au traitement des signaux vidéo issus de générateurs d'images synthétiques tels que des jeux vidéo, ou des ordinateurs domestiques, et destinés à être appliqués à l'entrée d'antenne d'un téléviseur domestique utilisé comme terminal du susdit générateur.

Dans certains pays, une prise dite de péritélévision permet l'introduction directe dans le téléviseur des composantes de couleur d'un signal vidéo. Toutefois cette prise n'est pas obligatoire dans tous les pays et de plus les téléviseurs anciens n'en sont pas pourvus. Il est donc nécessaire dans de nombreux cas de prévoir la fourniture des signaux au téléviseur par son entrée d'antenne. Ces signaux doivent alors moduler une porteuse selon la norme de radiodiffusion pour laquelle est conçu le téléviseur. Ceci est accompli au moyen d'un modulateur qui fait varier l'amplitude d'une porteuse à très haute fréquence en fonction du signal vidéo composite engendré par le générateur d'image.

La technique la plus courante dans le domaine des modulateurs est celle des modulateurs dits : "en anneau". Ces derniers utilisent des diodes modulatrices et au moins deux transformateurs. Ils sont trop coûteux pour l'application de loisirs envisagée ici. On a donc cherché à en simplifier la structure par l'utilisation de modulateurs à transistors MOS. Ces modulateurs ont des performances inférieures à celles des modulateurs en anneau, mais ils sont suffisants pour le traitement d'images synthétiques auxquelles on ne réclame pas une grande subtilité dans les nuances de couleur.

Un modulateur de ce type est décrit par exemple dans le brevet des Etats-Unis d'Amérique n° 4 160 959. Le modulateur décrit dans ce document comporte un transistor MOS à la grille duquel est appliqué le signal vidéo composite, cependant que le signal de porteuse très haute fréquence est appliqué sur sa source au moyen d'un deuxième transistor qui sert d'oscillateur et est monté en cascode avec le premier.

Les jeux vidéo ou les ordinateurs domestiques les plus récents fournissent un signal de son en plus de l'image, pour en agrémenter l'utilisation. Le problème se pose alors d'ajouter une modulation correspondant au signal de son. Cette modulation n'est pas prévue dans le montage du document ci-dessus. Une solution banale est fournie le plus souvent en ajoutant purement et simplement à la porteuse image déjà modulée une porteuse son préalablement modulée par ailleurs. Cette solution est coûteuse puisqu'elle nécessite un deuxième modulateur. Une autre solution, proposée par le brevet français n° 2 417 900 consiste à additionner l'un à l'autre le signal vidéo composite d'une part, et la fréquence de sous-porteuse son, modulée par le son, d'autre part, et à utiliser le signal somme ainsi obtenu pour moduler la porteuse à très haute fréquence, dans un modulateur en anneau. Cette solution est coûteuse également du fait de l'emploi d'un modulateur en anneau : elle ne pourrait pas être appliquée avec un modulateur à transistor MOS parceque ce dernier a des performances de linéarité médiocres, et il se produirait une transmodulation entre le son et l'image.

L'invention se propose de fournir un modulateur qui ne présente aucun des inconvénients des modulateurs existants. Le modulateur selon l'invention, particulièrement destiné au traitement d'images et de sons synthétiques dans le cas des normes de télévision dont le son est en modulation de fréquence, utilise un modulateur à transistor MOS, et ne nécessite pas de modulateur additionnel pour le son.

Le modulateur selon l'invention est notamment remarquable en ce que, ce transistor MOS étant du type bi-grille, le signal de sortie est prélevé aux bornes d'une impédance placée dans le circuit de drain dudit transistor, cependant que les trois électrodes du transistor autre que le drain sont reliées, l'une à une entrée de signal vidéo composite, une autre à une entrée de signal de porteuse à très haute fréquence et une autre à une entrée de signal d'interporteuse son modulée en fréquence par le son.

Dans une forme de réalisation particulière, le signal vidéo composite est appliqué à la source du transistor MOS, le signal de porteuse étant appliqué à l'une des grilles et le signal d'interporteuse à l'autre grille.

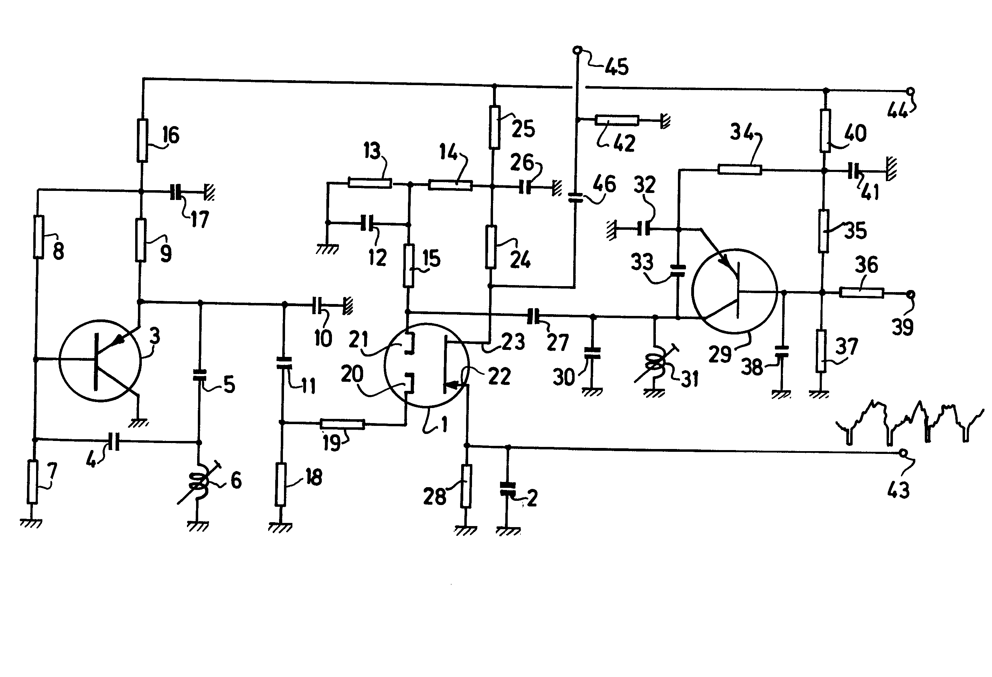

La description qui va suivre, en regard du dessin annexé décrivant un exemple non limitatif fera bien comprendre comment l'invention peut être réalisée.

La figure unique représente le schéma général d'un modulateur avec les oscillateurs engendrant les porteuses.

Une source d'alimentation positive est reliée à la borne 44 et alimente les circuits des transistors 29, 1, 3 par des éléments de découplage à résistance-capacité respectivement 40-41, 25-26, 16-17.

Un générateur de signal de porteuse à très haute fréquence est constitué par les éléments 3 à 10 d'un oscillateur. Par l'expression "très haute fréquence", on entend une fréquence située dans une des bandes usuelles de télévision (bandes I, III, IV, V).

Par exemple l'oscillateur a ici une fréquence de 600 MHz.

Il est constitué par un transistor PNP oscillateur 3 monté en collecteur commun, avec un couplage base-émetteur, réalisé par la chaîne de condensateurs en série 4, 5, 10 accordés par une inductance réglable 6 branchée entre le point commun des condensateurs 4 et 5 et la masse. Un pont de résistances 7, 8 détermine la polarisation de la base, et le signal de porteuse à très haute fréquence est recueilli au point de liaison de l'émetteur avec une résistance 9, placée en série dans le trajet de courant d'émetteur.

Un oscillateur modulable en fréquence constituant un générateur de signal d'interporteuse son modulé, est composé des éléments 29 à 39. Le signal d'interporteuse modulé en fréquence est recueilli sur le collecteur du transistor 29, dans le trajet de courant duquel est placé un circuit bouchon accordé 30, 31. Un couplage collecteur-émetteur est assuré par un pont capacitif 32, 33. Une résistance 34 est insérée dans le trajet de courant d'émetteur, et un pont de résistances 35, 37 détermine la polarisation de base du transistor. Le circuit d'accord 30, 31 est réglé sur la fréquence d'interporteuse son, en général 4,5 MHz ou 5,5 MHz ou 6 MHz selon les normes officielles dites respectivement NTSC, B et G, I. Le condensateur 38 connecté entre base et masse, découple la base vis à vis de la fréquence d'interporteuse. Sur la borne 39 est appliqué le signal de son, basse fréquence, transmis à la base via une résistance 36, pour provoquer la modulation en fréquence de l'oscillateur.

Le transistor modulateur 1, du type MOS bigrille, est polarisé au moyen d'une résistance 28 en série dans le trajet de courant de source, des résistances 18, 19 reliant la grille 20 à la masse en courant continu, et un pont de résistances 13, 14 découplé par un condensateur 12 appliquant à la grille 21, via une résistance 15, une tension continue intermédiaire entre celle de la masse et celle de l'alimentation.

Le signal de sortie est prélevé aux bornes d'une impédance placée dans le circuit de drain du transistor 1. Cette impédance est ici une résistance 24 placée entre l'alimentation et le drain du transistor. On pourrait aussi utiliser un circuit bouchon accordé sur la très haute fréquence ; cependant le dispositif fonctionne parfaitement avec une simple résistance, plus économique. Le signal de sortie est transmis à une borne de sortie 45 par un condensateur de liaison 46. Une résistance 42 entre la borne 45 et la masse adapte l'impédance de sortie à celle du cable de liaison branché sur la borne 45.

La source du transistor 1 est reliée par la borne 43 à un générateur de signal vidéo composite, non représenté. Ce signal amené à la source du transistor 1 doit être positif dans le cas des normes B, G, I ou NTSC.

La grille 20 est reliée au générateur de signal de porteuse à très haute fréquence (3 à 10) via la résistance 19 et le condensateur de liaison 11 relié à l'émetteur du transistor oscillateur 3.

La grille 21 est reliée au générateur de signal d'interporteuse son modulé en fréquence 30 à 39 via le condensateur de liaison 27 relié au collecteur du transistor oscillateur modulable en fréquence 2. En outre le condensateur 27 avec la résistance 15 constituent un filtre passe bas.

Ainsi donc le transistor MOS 1 remplit à lui seul trois fonctions, la source avec la grille 20 se comportent en modulateur vidéo, les deux grilles ensemble se comportent en changeur de fréquence pour l'interporteuse son, et la source avec le drain se comportent en duplexeur des deux voies vidéo et son. On trouve aux bornes de la résistance 24 deux porteuses HF modulées en fréquence à 606 et 594 MHz, si par exemple l'interporteuse son est à 6 MHz. Il est inutile de prévoir un filtrage, le téléviseur se chargeant de sélectionner la porteuse qui lui convient.

On peut intervertir certains des générateurs bien que le branchement décrit ici à titre d'exemple soit le plus avantageux du point de vue de l'adaptation des inpédances, le générateur de signal vidéo composite extérieur étant le plus à même de commander la tension de source du transistor 1, qui a une impédance plus basse que les grilles. On pourrait cependant, moyennant des aménagements facilement réalisables par l'homme du métier, tels que des adaptations d'impédance et l'inversion du signal vidéo, appliquer par exemple la porteuse à très haute fréquence ou l'interporteuse son sur la source, et les autres signaux chacun sur une des grilles.

Un circuit selon la description ci-dessus peut être facilement réalisé dans un boîtier plat d'environ 25 x 50 mm, avec une paroi de blindage entre la partie oscillateur à 600 MHz et le reste du circuit.

REVENDICATIONS :

1. Modulateur à transistor MOS pour le traitement de signaux vidéo et de signaux de son issus de générateurs d'image et de son synthétiques et destinés à être appliqués à l'entrée d'antenne d'un téléviseur domestique, caractérisé en ce que, le transistor MOS étant du type bigrille, le signal de sortie est prélevé aux bornes d'une impédance placée dans le circuit de drain dudit transistor, cependant que les trois électrodes du transistor autres que le drain sont reliées, l'une à un générateur de signal vidéo composite, une autre à un générateur de signal de porteuse à très haute fréquence, et une autre à un générateur de signal d'interporteuse son modulé en fréquence par le son.

2. Modulateur selon la revendication 1, caractérisé en ce que le signal vidéo composite est appliqué à la source du transistor MOS, le signal de porteuse étant appliqué à l'une des grilles et le signal d'interporteuse à l'autre grille.

3. Modulateur selon l'une des revendications 1 ou 2, caractérisé en ce que l'impédance placée dans le circuit de drain est une résistance.

0182425

PHF 84 - 600

# Office européen des brevets

# RAPPORT DE RECHERCHE EUROPEENNE

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int Cl.4) |
|---|---|---|---|
| D,A | FR-A-2 417 900 (THOMSON-BRANDT) <br> * Page 1, lignes 1-29; page 3, ligne 14 - page 4, ligne 6; figure 1 * <br><br> --- | 1 | H 04 N    5/40 |
| A | PATENTS ABSTRACTS OF JAPAN, vol. 5, no. 55 (E-52)[727], 16 avril 1981; & JP - A - 56 6582 (HITACHI SEISAKUSHO K.K.) 23-01-1981 <br> * En entier * <br><br> ----- | 1 | |

DOMAINES TECHNIQUES RECHERCHES (Int. Cl.4)

H 04 N    5/40
H 04 N    5/38
H 03 C    1/36

Le présent rapport de recherche a été établi pour toutes les revendications

| Lieu de la recherche <br> LA HAYE | Date d'achèvement de la recherche <br> 07-01-1986 | Examinateur <br> BEQUET T.P. |
|---|---|---|

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons

& : membre de la même famille, document correspondant

OEB Form 1503 03 82